# FASCICULE DE BREVET EUROPEEN

(11) **EP 2 855 564 B1**
(45) Date de publication et mention de la délivrance du brevet: **08.08.2018**
(21) Numéro de dépôt: 13730018.2
(22) Date de dépôt: 03.06.2013
(51) Int. Cl.: C08J 5/00, C08J 3/22, C08L 23/02, C08K 3/04, B29B 7/38, B29C 70/12, C08L 23/04, C08L 23/10, B29C 47/44, B29C 47/60

(54) **MATÉRIAU COMPOSITE A TRÈS FAIBLE TAUX DE NANOCHARGES CARBONÉES, SON PROCÉDÉ DE PRÉPARATION ET SES UTILISATIONS**
VERBUNDMATERIAL MIT SEHR GERINGER KONZENTRATION VON KOHLENSTOFF-NANOFÜLLSTOFFEN, HERSTELLUNGSVERFAHREN DAFÜR UND VERWENDUNGEN DES BESAGTEN MATERIALS
COMPOSITE MATERIAL WITH A VERY LOW CONCENTRATION OF CARBON NANOFILLERS, PRODUCTION METHOD THEREOF AND USES OF SAID MATERIAL

(30) Priorité: 04.06.2012 FR 1255179; 03.07.2012 US 201261667682 P
(43) Date de publication de la demande: 08.04.2015
(73) Titulaire: Arkema France, 92700 Colombes (FR)
(72) Inventeur: KORZHENKO, Alexander, F-64000 Pau (FR); DELPRAT, Patrick, F-64230 Lescar (FR); BLUTEAU, Catherine, F-64000 Pau (FR); TYMOSHENKO, Andriy, F-64000 Pau (FR); GORYACHKIN, Anatoliy, F-64000 Pau (FR); ZAKHAROV, Dmitry, F-64000 Pau (FR)
(74) Mandataire: Bonnel, Claudine
(86) Numéro de dépôt international: PCT/FR2013/051244
(87) Numéro de publication internationale: WO 2013/182792

(56) Documents cités:
- EP-A1- 1 719 804
- EP-A1- 1 777 259
- EP-A2- 1 541 322
- WO-A1-03/085681
- WO-A1-2004/097852
- WO-A1-2005/015574
- WO-A1-2011/141366
- WO-A1-2011/141369
- WO-A2-2005/044865
- JP-A- 2007 126 578
- JP-A- 2011 173 957
- KR-A- 20090 065 111
- US-A1- 2004 211 942

## Description

### Domaine de l'invention

La présente invention concerne un matériau composite à base d'une composition polymérique et de très faibles taux de nanocharges carbonées, en particulier de nanotubes de carbone, présentant des propriétés mécaniques améliorées, ainsi que son procédé de préparation et ses différentes utilisations.

### Etat de la technique

Les nanotubes de carbone (ou NTC) sont connus et possèdent des structures cristallines particulières, de forme tubulaire, creuses et closes, obtenues à partir de carbone. Les NTC sont en général constitués d'un ou plusieurs feuillets de graphite agencés de façon concentrique autour d'un axe longitudinal. On distingue ainsi les nanotubes mono-parois (Single Wall Nanotubes ou SWNT) et les nanotubes multi-parois (Multi Wall Nanotubes ou MWNT).

Les NTC sont disponibles dans le commerce ou peuvent être préparés par des méthodes connues. Il existe plusieurs procédés de synthèse de NTC, notamment la décharge électrique, l'ablation laser et le dépôt chimique en phase vapeur ou CVD (Chemical Vapour Déposition). Ce procédé CVD consiste précisément à injecter une source de carbone à relativement haute température sur un catalyseur qui peut être constitué d'un métal tel que le fer, le cobalt, le nickel ou le molybdène, supporté sur un solide inorganique tel que l'alumine, la silice ou la magnésie. Les sources de carbone peuvent comprendre le méthane, l'éthane, l'éthylène, l'acétylène, l'éthanol, le méthanol, voire un mélange de monoxyde de carbone et d'hydrogène.

D'un point de vue mécanique, les NTC présentent à la fois une excellente rigidité (mesurée par le module d'Young), comparable à celle de l'acier, tout en étant extrêmement légers. En outre, ils présentent d'excellentes propriétés de conductivité électrique et thermique qui permettent d'envisager de les utiliser comme additifs pour conférer ces propriétés à divers matériaux, notamment macromoléculaires, tels que des polymères thermoplastiques, des élastomères ainsi que d'autres polymères thermodurcissables.

Toutefois, les NTC s'avèrent difficiles à manipuler et à disperser, en raison de leur faible taille, de leur pulvérulence et éventuellement, lorsqu'ils sont obtenus par la technique de CVD, de leur structure enchevêtrée, d'autant plus importante que l'on cherche à augmenter leur productivité massique aux fins d'améliorer la production et de réduire le taux de cendres résiduelles. L'existence de fortes interactions de Van der Waals entre les nanotubes nuit également à leur dispersibilité et à la stabilité des matériaux composites obtenus.

La mauvaise dispersibilité des NTC affecte de manière importante les caractéristiques des composites qu'ils forment avec les matrices polymères dans lesquelles ils sont introduits. On observe en particulier l'apparition de nanofissures, se formant au niveau d'agrégats de nanotubes, qui conduisent à une fragilisation du composite. Par ailleurs, dans la mesure où les NTC sont mal dispersés, il est nécessaire d'augmenter leur taux pour atteindre une conductivité électrique et/ou thermique donnée.

A cet effet, les NTC sont utilisés principalement pour leurs propriétés électriques aujourd'hui à un taux relativement élevé, généralement supérieur à 0,5% en poids.

Etant donné les difficultés techniques pour incorporer des NTC dans des matrices polymériques, leurs effets n'ont pas été complètement explorés.

Pour remédier à la mauvaise dispersibilité des NTC, susceptible d'affecter de manière importante les caractéristiques des matrices polymériques dans lesquelles ils sont introduits, il a été proposé différentes solutions dans l'état de la technique. Parmi celles-ci, on peut citer la sonication, qui n'a toutefois qu'un effet temporaire, ou l'ultrasonication qui a pour effet de couper en partie les nanotubes et de créer des fonctions oxygénées pouvant affecter certaines de leurs propriétés ; Ou encore on peut citer des techniques de greffage ou de fonctionnalisation des NTC qui, présentent cependant l'inconvénient d'être le plus souvent mises en oeuvre dans des conditions agressives susceptibles d'endommager, voire détruire les nanotubes.

Plus récemment, les derniers développements ont porté sur la préparation de mélanges-maîtres comportant des nanotubes de carbone à des taux élevés, dispersés efficacement et de façon homogène à l'échelle industrielle, dans une matrice polymérique, à base de polymère thermoplastique, d'un élastomère ou d'une résine thermodurcissable. On peut citer par exemple les documents au nom de la Société Déposante qui décrivent de tels procédés de préparation, EP 1 995 274 ; WO 2010/046606 ; WO 2010/109118 ; WO 2010/109119.

Ces mélanges-maîtres fortement dosés en nanotubes de carbone peuvent ensuite être aisément manipulés puis dilués dans des matrices polymères pour former des matériaux composites à faible taux de NTC parfaitement homogènes, destinés à la fabrication de pièces composites.

De façon surprenante, il a maintenant été découvert que l'incorporation de nanocharges carbonées telles que des nanotubes de carbone dans une matrice polymère à un taux extrêmement faible, inférieur à 0,01% en poids, permettait d'en améliorer les propriétés mécaniques, notamment les propriétés de traction, ou de lui conférer de nouvelles propriétés lors de sa transformation en pièces composites.

Les documents WO 2004/097852, WO 2005/015574 et WO 03/085681 décrivent des compositions à base d'une matrice polymérique et de nanotubes de carbone à une teneur pouvant aller de 0,001% à 50%. Il s'agit de conférer des propriétés conductrices à la matrice polymérique. Il n'est nullement question dans ces enseignements d'améliorer les propriétés mécaniques d'un matériau composite avec des teneurs inférieures à 0,01% en nanocharges carbonées. Le document EP1719804 A1 décrit une composition de résine pour composant électronique de la bande GHz. La composition à base d'un polymère thermoplastique comprend de 0,0001 à 0,4% en poids de tubes de carbone nanométriques. La présente invention a donc pour but de fournir un matériau composite très faiblement dosé en nanocharges carbonées, présentant des propriétés mécaniques améliorées, un procédé de préparation dudit matériau composite et ses différentes utilisations.

### Résumé de l'invention

De façon plus précise, l'invention a pour objet l'utilisation de nanocharges carbonées choisies parmi les nanotubes de carbone, seuls ou en mélange avec du graphène, à une teneur comprise entre 25 ppm et 99 ppm, pour améliorer les propriétés de traction d'une matrice polymère renfermant au moins un polymère choisi parmi un polymère thermoplastique seul ou en mélange avec une base de résine élastomère, tout en facilitant sa mise en forme en pièces composites selon toute technique appropriée, et en améliorant sa capacité de dissipation électrostatique lors de la production de ces pièces composites, ledit polymère thermoplastique choisi parmi les homo- et copolymères d'oléfines. Selon l'invention, le matériau composite comprend une composition polymérique comprenant une matrice polymère renfermant au moins un polymère thermoplastique choisi parmi les homo- et copolymères d'oléfines tels que le polyéthylène, le polypropylène, le polybutadiène, le polybutylène et les copolymères acrylonitrile-butadiène-styrène. L'utilisation selon l'invention peut avoir recours à un procédé de préparation d'un matériau composite comprenant une composition polymérique et des nanocharges carbonées, comportant les étapes suivantes :
a) l'introduction, puis le malaxage, dans un dispositif de compoundage, d'un mélange-maître concentré en nanocharges carbonées, avec une matrice polymérique pour obtenir un pré-composite comprenant de 0,25% à 3% en masse de nanocharges carbonées ;
b) éventuellement la transformation du pré-composite sous forme solide agglomérée telle que des granulés ou de la poudre broyée ;
c) l'introduction du pré-composite dans une matrice polymère renfermant au moins un polymère choisi parmi un polymère thermoplastique seul ou en mélange avec une base de résine élastomère pour obtenir un matériau composite.

Le matériau composite susceptible d'être obtenu selon ce procédé contient de 25 ppm à 99 ppm en masse de nanocharges carbonées. L'invention a aussi pour objet l'utilisation du matériau composite selon l'invention ou susceptible d'être obtenu suivant le procédé selon l'invention, pour la fabrication de divers produits composites tels que des fils, des films, des tubes, des fibres, des non tissés comme des tissus ou des feutres, utilisables pour les conduits de fibres optiques, le gainage de câbles, les conduites de gaz ou d'eaux de rejets ou industrielles, les revêtements extrudés ou moulés, les articles fabriqués par injection, extrusion, compression ou moulage, dans le secteur automobile (pièces sous le capot, pièces externes ou internes, étanchéité, etc.) ou dans le domaine de l'agriculture, notamment pour la protection des terres d'agriculture.

L'invention s'étend également à l'utilisation de nanocharges carbonées choisies parmi les nanotubes de carbone, seuls ou en mélange avec du graphène à une teneur comprise entre 25 ppm et 99 ppm pour améliorer les propriétés de traction d'une matrice polymère renfermant au moins un polymère choisi parmi un polymère thermoplastique seul ou en mélange avec une base de résine élastomère, tout en facilitant sa mise en forme en pièces composites selon toute technique appropriée, notamment par injection, extrusion, compression, moulage ou le filage des fibres, et en améliorant sa capacité de dissipation électrostatique lors de la production de ces pièces composites.

### Description détaillée

### Matériau composite

Le matériau composite selon l'invention comprend des nanocharges carbonées et une composition polymérique. Ces constituants seront à présent décrits plus en détail.

### Les nanocharges carbonées

Selon l'invention, les nanocharges carbonées sont choisies parmi les nanotubes de carbone, les nanofibres de carbone, le graphène ou un mélange de ceux-ci en toutes proportions.

Les nanotubes de carbone peuvent être du type monoparoi, à double paroi ou à parois multiples. Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère selon l'invention des nanotubes de carbone multi-parois obtenus suivant un procédé de dépôt chimique en phase vapeur (ou CVD), par décomposition catalytique d'une source de carbone (de préférence d'origine végétale), tel que décrit notamment dans la demande EP 1 980 530 de la Demanderesse.

Les nanotubes ont habituellement un diamètre moyen allant de 0,1 à 100 nm, de préférence de 0,4 à 50 nm et, mieux, de 1 à 30 nm, voire de 10 à 15 nm, et avantageusement une longueur de 0,1 à 10 µm. Leur rapport longueur/diamètre est de préférence supérieur à 10 et le plus souvent supérieur à 100. Leur surface spécifique est par exemple comprise entre 100 et 300 m²/g, avantageusement entre 200 et 300 m²/g, et leur densité apparente peut notamment être comprise entre 0,05 et 0,5 g/cm3 et plus préférentiellement entre 0,1 et 0,2 g/cm3. Les nanotubes multiparois peuvent par exemple comprendre de 5 à 15 feuillets (ou parois) et plus préférentiellement de 7 à 10 feuillets. Ces nanotubes peuvent ou non être traités.

Un exemple de nanotubes de carbone bruts est notamment disponible dans le commerce auprès de la société ARKEMA sous la dénomination commerciale Graphistrength® C100.

Ces nanotubes peuvent être purifiés et/ou traités (par exemple oxydés) et/ou fonctionnalisés, avant leur mise en oeuvre dans le procédé selon l'invention.

La purification des nanotubes peut être réalisée par lavage à l'aide d'une solution d'acide sulfurique, de manière à les débarrasser d'éventuelles impuretés minérales et métalliques résiduelles, comme par exemple le fer, provenant de leur procédé de préparation. Le rapport pondéral des nanotubes à l'acide sulfurique peut notamment être compris entre 1 :2 et 1 :3. L'opération de purification peut par ailleurs être effectuée à une température allant de 90 à 120°C, par exemple pendant une durée de 5 à 10 heures. Cette opération peut avantageusement être suivie d'étapes de rinçage à l'eau et de séchage des nanotubes purifiés. Les nanotubes peuvent en variante être purifiés par traitement thermique à haute température, typiquement supérieur à 1000°C.

L'oxydation des nanotubes est avantageusement réalisée en mettant ceux-ci en contact avec une solution d'hypochlorite de sodium renfermant de 0,5 à 15% en poids de NaOCl et de préférence de 1 à 10% en poids de NaOCl, par exemple dans un rapport pondéral des nanotubes à l'hypochlorite de sodium allant de 1:0,1 à 1:1. L'oxydation est avantageusement réalisée à une température inférieure à 60°C et de préférence à température ambiante, pendant une durée allant de quelques minutes à 24 heures. Cette opération d'oxydation peut avantageusement être suivie d'étapes de filtration et/ou centrifugation, lavage et séchage des nanotubes oxydés.

La fonctionnalisation des nanotubes peut être réalisée par greffage de motifs réactifs tels que des monomères vinyliques à la surface des nanotubes. Le matériau constitutif des nanotubes est utilisé comme initiateur de polymérisation radicalaire après avoir été soumis à un traitement thermique à plus de 900°C, en milieu anhydre et dépourvu d'oxygène, qui est destiné à éliminer les groupes oxygénés de sa surface. Il est ainsi possible de polymériser du méthacrylate de méthyle ou du méthacrylate d'hydroxyéthyle à la surface de nanotubes de carbone en vue de faciliter notamment leur dispersion dans le PVDF.

On peut utiliser dans la présente invention des nanotubes bruts, c'est-à-dire des nanotubes qui ne sont ni oxydés ni purifiés ni fonctionnalisés et n'ont subi aucun autre traitement chimique et/ou thermique. En variante, on peut utiliser des nanotubes purifiés, notamment par traitement thermique à haute température. On préfère par ailleurs que les nanotubes de carbone ne soient pas broyés.

Les nanofibres de carbone sont, comme les nanotubes de carbone, des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure (I. MARTIN-GULLON et al., Carbon 44 (2006) 1572-1580). En effet, les nanotubes de carbone sont constitués d'un ou plusieurs feuillets de graphène enroulés manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm voire plus.

On préfère utiliser des nanofibres de carbone ayant un diamètre de 100 à 200 nm, par exemple d'environ 150 nm (VGCF® de SHOWA DENKO), et avantageusement une longueur de 100 à 200 µm.

Le terme « graphène » désigne un feuillet de graphite plan, isolé et individualisé, mais aussi, par extension, un assemblage comprenant entre un feuillet et quelques dizaines de feuillets et présentant une structure plane ou plus ou moins ondulée. Chaque feuillet de graphène est formé d'atomes de carbone liés les uns aux autres par des liaisons C-C de type sp² et formant un réseau hexagonal bidimensionnel.

D'une manière générale, le graphène utilisé dans l'invention se présente sous la forme de particules solides de taille nanométrique présentant une épaisseur inférieure à 15 nm et au moins une dimension latérale sensiblement perpendiculaire à ladite épaisseur comprise entre 0,1 µm et 500 µm, et comprenant de 1 à 50 feuillets, lesdits feuillets étant susceptibles d'être désolidarisés les uns des autres sous la forme de feuillets indépendants par exemple lors d'un traitement par des ultrasons.

Selon une forme d'exécution préférée de l'invention, les nanocharges carbonées comprennent des nanotubes de carbone, de préférence des nanotubes de carbone multi-parois obtenus suivant un procédé de dépôt chimique en phase vapeur, seuls ou en mélange avec du graphène.

La quantité de nanocharges carbonées dans le matériau composite de l'invention est comprise entre 0,1 ppm et 99 ppm, de préférence entre 1 ppm et 95 ppm.

### La composition polymérique

Selon l'invention, la composition polymérique comprend une matrice polymère renfermant au moins un polymère thermoplastique seul ou en mélange avec une base de résine élastomère.

Par « polymère thermoplastique », on entend, au sens de la présente invention, un polymère qui fond lorsqu'on le chauffe et qui peut être mis et remis en forme à l'état fondu.

Ce polymère thermoplastique est choisi parmi : les homo- et copolymères d'oléfines tels que le polyéthylène, le polypropylène, le polybutadiène, le polybutylène et les copolymères acrylonitrile-butadiène-styrène ; les homo- et copolymères acryliques et les poly(méth)acrylates d'alkyles tels que le poly(méthacrylate de méthyle) ; les homo- et copolyamides ; les polycarbonates ; le poly(téréphtalate d'éthylène) ; le poly(téréphtalate de butylène) ; les polyéthers tels que le poly(phénylène éther), le poly(oxyméthylène) et le poly(oxyéthylène) ou poly(éthylène glycol); le polystyrène ; les copolymères de styrène et d'anhydride maléique ; le poly(chlorure de vinyle) ; les polymères fluorés tels que le poly(fluorure de vinylidène), le polytétrafluoréthylène et le polychlorotrifluoroéthylène ; les caoutchoucs naturels ou synthétiques ; les polyuréthanes thermoplastiques ; les polyaryl éther cétones (PAEK) telles que la polyétheréthercétone (PEEK) et la polyéther cétone cétone (PEKK) ; le polyétherimide ; la polysulfone ; le poly(sulfure de phénylène) ; l'acétate de cellulose ; le poly(acétate de vinyle) ; et leurs mélanges.

Selon une forme d'exécution préférée de l'invention, le polymère est choisi parmi les homo- et copolymères d'oléfines, en particulier le polyéthylène, le polypropylène, le polybutadiène, le polybutylène, et les copolymères acrylonitrile-butadiène-styrène, les polycarbonates et les homo- et copolymères d'amides comme les polyamides 6, 6.6, 6.10, 6.12, 11, 12, 10.10, 12.12, 4.6.

Selon l'invention, la composition polymérique peut renfermer un polymère thermoplastique en mélange avec une base de résine élastomérique. Par « base de résine élastomérique », on entend, dans la présente description, un polymère organique ou siliconé, qui forme, après vulcanisation, un élastomère capable de supporter de grandes déformations de façon quasi-réversible, c'est-à-dire susceptible d'être soumis à une déformation uniaxiale, avantageusement d'au moins deux fois sa longueur d'origine à température ambiante (23°C), pendant cinq minutes, puis de recouvrer, une fois la contrainte relâchée, sa dimension initiale, avec une déformation rémanente inférieure à 10% de sa dimension initiale.

Du point de vue structural, les élastomères sont généralement constitués de chaînes polymériques reliées entre elles, pour former un réseau tridimensionnel. Plus précisément, on distingue parfois les élastomères thermoplastiques, dans lesquels les chaînes polymériques sont reliées entre elles par des liaisons physiques, telles que des liaisons hydrogène ou dipôle-dipôle, des élastomères thermodurcissables, dans lesquels ces chaînes sont reliées par des liaisons covalentes, qui constituent des points de réticulation chimique. Ces points de réticulation sont formés par des procédés de vulcanisation mettant en oeuvre un agent de vulcanisation qui peut par exemple être choisi, selon la nature de l'élastomère, parmi les agents de vulcanisation à base de soufre, en présence de sels métalliques de dithiocarbamates ; les oxydes de zinc combinés à de l'acide stéarique ; les résines phénol-formaldéhyde bifonctionnelles éventuellement halogénées, en présence de chlorure d'étain ou d'oxyde de zinc ; les peroxydes ; les aminés ; les hydrosilanes en présence de platine ; etc.

La présente invention concerne plus particulièrement les bases de résine élastomérique renfermant, ou constituées par, des élastomères thermodurcissables éventuellement en mélange avec des élastomères non réactifs, c'est-à-dire non vulcanisables (tels que les caoutchoucs hydrogénés).

Les bases de résine élastomérique utilisables selon l'invention peuvent notamment comprendre, voire être constituées par, un ou plusieurs polymères choisis parmi : les élastomères fluorocarbonés ou fluorosiliconés ; les homo- et copolymères du butadiène, éventuellement fonctionnalisées par des monomères insaturés tels que l'anhydride maléique, l'acide (méth)acrylique, l'acrylonitrile (NBR) et/ou le styrène (SBR ; SBS ; SEBS) ; le néoprène (ou polychloroprène) ; le polyisobutylène (PIB) ; le polyisopropylène (PIP) ; le polyisoprène ; les copolymère d'isoprène avec le styrène, le butadiène, l'acrylonitrile et/ou le méthacrylate de méthyle ; les copolymères à base de propylène et/ou d'éthylène et notamment les terpolymères à base d'éthylène, de propylène et de diènes (EPDM), ainsi que les copolymères de ces oléfines avec un (méth)acrylate d'alkyle ou l'acétate de vinyle ; les caoutchoucs naturels (NR) ; les caoutchoucs butyle halogénés ; les élastomères de silicone tels que les poly(diméthylsiloxanes) à extrémités vinyliques ; les polyuréthanes (PU) ; les plastomères comprenant des oléfines en C-4, C-5, C-6, C-8 C-9, ou C-12 ; les polyesters ; les polymères acryliques tels que le poly(acrylate de butyle) porteur de fonctions acide carboxylique ou époxy ; ainsi que leurs dérivés modifiés ou fonctionnalisés et leurs mélanges, sans que cette liste ne soit limitative.

On préfère utiliser selon l'invention les résines élastomériques EPDM, SBR, SBS, SEBS, NBR, NR, PIB, PIP, PU, ou les plastomères en C-4, C-5, C-6, C-8, C-9, C-12, ou leurs mélanges en toutes proportions.

Selon une forme d'exécution préférée de l'invention, la composition polymérique comprend au moins un polymère thermoplastique utilisé seul.

Selon l'invention, l'incorporation des nanocharges carbonées à des taux très faibles ne permet pas de rendre conductrice la composition polymérique mais permet d'atteindre les propriétés mécaniques requises pour les applications envisagées.

### Autres constituants

Outre les constituants précités, le matériau composite selon l'invention peut comprendre d'autres additifs, en particulier choisis parmi les additifs non polymériques ou les additifs polymériques.

Les additifs non polymériques éventuellement inclus dans le matériau composite selon l'invention comprennent en particulier des plastifiants non polymériques, des tensioactifs tels que le dodécyl benzène sulfonate de sodium, des charges inorganiques telles que la silice, le dioxyde de titane, le talc ou le carbonate de calcium, des filtres UV, notamment à base de dioxyde de titane, des retardateurs de flamme, des solvants du polymère, des stabilisants thermiques ou à la lumière, notamment à base de phénol ou de phosphite, et leurs mélanges.

Comme additifs polymériques, on peut citer des polymères dispersants ou plastifiants, notamment des polymères dispersants améliorant la dispersion des nanocharges dans la matrice polymère.

La nature chimique du dispersant est fonction de la nature chimique de la matrice polymère à renforcer par les nanocharges carbonées. On peut citer par exemple comme dispersants, les oligomères de téréphtalate de butyle cyclique (notamment la résine CBT® 100 de CYCLICS), les cires naturelles, les cires synthétiques, les cires de polyoléfines, les acides gras et leurs dérivés, les ester/amide, les acides gras saponifiés, le stearate de zinc, les esters sorbitaniques d'acides, le glycerol ester, les dérivés d'acides organiques, la partie organique d'organosilanes tels que l'amino Silane, (STRUKTOL® SCA 1100) le chloropropyle silane (STRUKTOL® SCA 930), l'epoxy silane (STRUKTOL® SCA 960), le méthacryloxy silane (STRUKTOL® SCA 974), les Vinyl silanes, STRUKTOL® SCA 971 and SCA 972), les polymères greffés (Polymer-G-MAH, Polymer-G-GMA), les titanates and zirconates (Tyzor). Les oligomères silsesquioxanes (POSS), les additifs ramifiés et polymères commercialisés sous les noms Boltorn H20, H30, H40, H20, H30, H40, S 1200, D 2800, P/S80 1200, DEO750 8500, H 1500, H/S80 1700, HV 2680, P 1000, PS 1925, PS 2550, H311, H2004, P500, P1000, W3000, U3000, et autres, DSM Hybrane), BYK-C 8000 de BYK Company, etc.

### Procédé de préparation

Un procédé de préparation d'un matériau composite comprenant une composition polymérique et des nanocharges carbonées choisies parmi les nanotubes de carbone, les nanofibres de carbone, le graphène ou un mélange de ceux-ci en toutes proportions, selon la présente invention sera à présent décrit plus en détails.

Ce procédé comprend une première étape a) de dilution d'un mélange-maître concentré en nanocharges carbonées dans une matrice polymérique en vue d'obtenir un pré-composite comprenant de 0,25% à 3% de nanocharges carbonées.

Par mélange-maître concentré en nanocharges carbonées, on entend un mélange-maître renfermant de 5% à 50% de nanocharges carbonées, notamment de nanotubes de carbone, dispersées dans une matrice polymérique à base d'un polymère thermoplastique, d'une base de résine élastomère et/ou d'un polymère dispersant.

Parmi les mélanges-maîtres utilisables, on peut citer par exemple les grades Graphistrength® CM de la société déposante, disponibles commercialement, notamment les grades CM 12-30; CM 13-30; CM 1-20; CM2-20 ; CM 3-20 ; CM 6-20 ; CM 7-20.

L'étape de dilution peut être réalisée par malaxage dans un dispositif de compoundage et conduit directement à un pré-composite comprenant de 0,25% à 3% de nanocharges carbonées.

Dans une variante, l'étape de dilution est réalisée en au moins deux étapes successives, afin d'affiner la dispersion, la première conduisant à un pré-composite comprenant de 2,5% à 10% en masse, de préférence de 2,5% à 5% en masse de nanocharges carbonées, la seconde conduisant à un pré-composite comprenant de 0,25% à 3% en masse de nanocharges carbonées. Selon cette variante, il est possible d'atteindre avec précision des taux très faibles de nanocharges dans la dispersion, tout en évitant le risque d'agglomération des nanocharges carbonées au sein de la dispersion.

Par « dispositif de compoundage », on entend, dans la présente description, un appareillage classiquement utilisé dans l'industrie des matières plastiques. Dans cet appareillage, la composition polymérique et le mélange-maître sont mélangés à l'aide d'un dispositif à fort cisaillement, par exemple une extrudeuse à double vis co-rotatives ou contre-rotatives ou un co-malaxeur.

Des exemples de co-malaxeurs utilisables selon l'invention sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxée. L'arbre est entraîné en rotation, et pourvu d'un mouvement d'oscillation dans la direction axiale, par un moteur. Ces co-malaxeurs peuvent être équipés d'un système de fabrication de granulés, adapté par exemple à leur orifice de sortie, qui peut être constitué d'une vis d'extrusion ou d'une pompe.

Les co-malaxeurs utilisables selon l'invention ont de préférence un rapport de vis L/D allant de 7 à 22, par exemple de 10 à 20, tandis que les extrudeuses co-rotatives ont avantageusement un rapport L/D allant de 15 à 56, par exemple de 20 à 50.

Comme dispositif de compoundage, on peut utiliser, notamment dans le cas où la matrice polymérique comprend une base de résine élastomère solide, un mélangeur ou broyeur à cylindres (bi- ou tricylindriques).

Selon l'étape a) du procédé selon l'invention, l'introduction, dans le dispositif de compoundage, du mélange-maître concentré et de la matrice polymérique peut se faire de différentes manières, soit simultanément dans deux organes d'introduction séparés, soit successivement dans une même zone d'alimentation du mélangeur.

La matrice polymérique peut être de même nature que la matrice polymérique constituant le mélange-maître concentré. En variante, le mélange-maître concentré comprend un dispersant et la matrice polymérique peut être différente de la matrice polymérique constituant le mélange-maître concentré.

A l'issue de l'étape a) le pré-composite peut être transformé éventuellement sous une forme physique solide agglomérée, par exemple sous forme de granulés, de poudre broyée, ou sous forme de joncs, de bande ou de film (étape b).

Selon l'étape c) du procédé selon l'invention, le pré-composite est introduit dans une matrice polymère renfermant au moins un polymère choisi parmi un polymère thermoplastique seul ou en mélange avec une base de résine élastomère, tels que décrits précédemment.

L'étape c) peut être réalisée au moyen de tout dispositif classique, en particulier à l'aide de mélangeurs internes, ou de mélangeurs ou broyeurs à cylindres (bi- ou tricylindriques). La quantité de pré-composite introduite dans la matrice polymère dépend du taux de nanocharges carbonées que l'on souhaite ajouter à cette matrice en vue d'obtenir les propriétés mécaniques recherchées pou le matériau composite obtenu.

Cette matrice polymère comprend au moins un polymère, qui peut être identique à, (ou différent de), celui ou à ceux utilisés dans la fabrication du mélange-maître, ou dans la préparation du pré-composite, ainsi qu'éventuellement divers additifs, par exemple des lubrifiants, des pigments, des stabilisants, des charges ou renforts, des agents anti-statiques, des fongicides, des agents ignifugeants, des solvants, des agents d'expansion, des modificateurs de rhéologie et leurs mélanges.

Le matériau composite obtenu peut être mis en forme selon toute technique appropriée, notamment par injection, extrusion, compression ou moulage, suivie d'un traitement de vulcanisation ou de réticulation dans le cas où la matrice polymérique comprend une base de résine élastomérique.

En variante, l'introduction de pré-composite dans la matrice polymère selon l'étape c) peut être effectuée à sec, directement dans l'outil de mise en forme du matériau composite, tel qu'un dispositif d'injection.

Le matériau composite selon l'invention ou susceptible d'être obtenu selon le procédé de l'invention présente des propriétés mécaniques, en particulier des propriétés de traction, améliorées.

La présence de nanocharges carbonées à un taux aussi faible que 0,1 ppm à moins de 100 ppm améliore la capacité de dissipation électrostatique de matrices polymères lors de la fabrication des pièces composites (fibres, films, objets...), sans affecter leurs propriétés mécaniques, et permet ainsi plus facilement leur mise en forme pour l'utilisation visée. En outre, la présence de nanocharges carbonées améliore sensiblement la présentation des produits finis obtenus à partir du matériau composite selon l'invention, notamment en termes d'apparence, d'aspect de surface et de qualités optiques.

L'invention sera mieux comprise à la lumière des exemples non limitatifs et purement illustratifs suivants.

### EXEMPLES

### Exemple 1 : Effet des NTC sur les propriétés mécaniques d'un polypropylène

On a utilisé le grade GRAPHISTRENGTH® CM 12-30 de la société Arkema, contenant 30% de NTC (MWNT) parfaitement dispersés dans une résine.

On a dispersé à l'aide d'un co-malaxeur BUSS du GRAPHISTRENGTH® CM 12-30 dans du polypropylène PPH (de MFI 20) de façon à obtenir un pré-composite comportant 0,5% en masse de NTC. Cette dispersion a été effectuée en 2 étapes, la première étape conduisant un pré-composite comportant 10% de NTC, la seconde étape consistant en une dilution dans le PPH d'un facteur 20.

Le pré-composite à 0,5% de NTC a été dilué à sec avec du PPH (MFI 20), directement dans l'unité de mise en forme par injection du produit composite, pour obtenir des matériaux composites à 25 ppm, 50 ppm et 95 ppm en poids de NTC, désignés respectivement par Composite 1, Composite 2 et Composite 3, se présentant sous forme de plaques de 6 x 6 x 0,3 cm, de barreaux et d'haltères.

Ces produits composites ont été soumis à des essais de traction selon la norme ISO 527-2, mis en oeuvre à partir de petites haltères H1, sur un dynanomètre MTS à une vitesse de 50 mm/min, en vue de comparer leurs propriétés mécaniques à celles de PPH ne comportant pas de NTC.

Les résultats de ces essais sont rassemblés dans le Tableau 1 ci-dessous.

**Tableau 1**

| | PPH (MFI 20) | Composite 1 | Composite 2 | Composite 3 |
|---|---|---|---|---|
| Taux de NTC, ppm | 0 | 25 | 50 | 95 |
| Contrainte à la rupture, (MPa) | 26 | 28,1 | 28,5 | 28,9 |
| Déformation à la rupture (%) | 40 | 100 | 180 | 300 |

On constate une forte amélioration des propriétés de traction du PPH à température ambiante pour des taux très faibles de NTC.

### Exemple 2 : Effet des NTC sur l'électricité statique dans un procédé par extrusion

Un pré-composite comportant 0,3% de NTC dans du polyéthylène a été préparé à partir d'un mélange-maître comprenant 2,5% de NTC dans du PE par compoundage et dosé à 95 ppm dans une extrudeuse pour la production de films PE.

Il a été observé une diminution de charge électrostatique de 400-450 W/m² à une valeur de l'ordre de 5-8 W/m², ce qui améliore considérablement le niveau de sécurité des appareillages et du personnel, et évite la mise en oeuvre d'autres systèmes pour les décharges électrostatiques lors de la fabrication des pièces composites ou objets.

## Revendications

1. Utilisation de nanocharges carbonées choisies parmi les nanotubes de carbone, seuls ou en mélange avec du graphène, à une teneur massique comprise entre 25 ppm et 99 ppm, pour améliorer les propriétés de traction d'une matrice polymère renfermant au moins un polymère choisi parmi un polymère thermoplastique seul, ou en mélange avec une base de résine élastomère, tout en facilitant sa mise en forme en pièces composites selon toute technique appropriée, et en améliorant sa capacité de dissipation électrostatique lors de la production de ces pièces composites, ledit polymère thermoplastique étant choisi parmi les homo- et copolymères d'oléfines.

2. Utilisation selon la revendication 1 **caractérisée en ce que** le polymère thermoplastique est choisi parmi le polyéthylène, le polypropylène, le polybutadiène, le polybutylène, et les copolymères acrylonitrile-butadiène-styrène.

3. Utilisation selon l'une des revendications 1 ou 2 **caractérisée en ce que** la base de résine élastomère est choisie parmi : les élastomères fluorocarbonés ou fluorosiliconés ; les homo- et copolymères du butadiène, éventuellement fonctionnalisées par des monomères insaturés ; le néoprène (ou polychloroprène) ; le polyisobutylène (PIB) ; le polyisopropylène (PIP) ; le polyisoprène ; les copolymères d'isoprène avec le styrène, le butadiène, l'acrylonitrile et/ou le méthacrylate de méthyle ; les copolymères à base de propylène et/ou d'éthylène et les terpolymères à base d'éthylène, de propylène et de diènes (EPDM), ainsi que les copolymères de ces oléfines avec un (méth)acrylate d'alkyle ou l'acétate de vinyle ; les caoutchoucs naturels (NR) ; les caoutchoucs butyle halogénés ; les élastomères de silicone ; les polyuréthanes (PU) ; les plastomères comprenant des oléfines en C-4, C-5, C-6, C-8 C-9, ou C-12 ; les polyesters ; le poly(acrylate de butyle) porteur de fonctions acide carboxylique ou époxy ; ainsi que leurs dérivés modifiés ou fonctionnalisés et leurs mélanges.

4. Utilisation selon l'une quelconque des revendications précédentes **caractérisée en ce que** les nanocharges carbonées sont introduites dans la matrice polymère sous la forme d'un pré-composite obtenu selon un procédé comportant les étapes suivantes :
a) l'introduction, puis le malaxage, dans un dispositif de compoundage, d'un mélange-maître concentré en nanocharges carbonées, avec une matrice polymérique pour obtenir un pré-composite comprenant de 0,25% à 3% en masse de nanocharges carbonées ;
b) éventuellement la transformation du pré-composite sous forme solide agglomérée telle que des granulés ou de la poudre broyée.

5. Utilisation selon la revendication 4 **caractérisée en ce que** l'étape a) est réalisée en au moins deux étapes successives, la première conduisant à un pré-composite comprenant de 2,5% à 10% en masse, de préférence de 2,5% à 5% en masse de nanocharges carbonées, la seconde conduisant au pré-composite comprenant de 0,25% à 3% en masse de nanocharges carbonées.

6. Utilisation selon la revendication 4 ou 5 **caractérisée en ce que** la matrice polymérique de l'étape a) est identique à la matrice polymère dans laquelle les nanocharges carbonées sont introduites.

7. Utilisation selon l'une quelconque des revendications 4 à 6 **caractérisée en ce que** l'introduction du pré-composite dans la matrice polymère est effectuée à sec, directement dans l'outil de mise en forme de la matrice polymère en pièces composites.

8. Utilisation selon l'une quelconque des revendications précédentes **caractérisée en ce que** la matrice polymère est utilisée pour la fabrication de fils, films, tubes, fibres, tissus ou feutres, utilisables pour les conduits de fibres optiques, le gainage de câbles, les conduites de gaz ou d'eaux de rejets ou d'eaux industrielles, les revêtements extrudés ou moulés ; pour les articles fabriqués par injection, extrusion, compression ou moulage, dans le secteur automobile ou dans le domaine de l'agriculture.

## Patentansprüche

1. Verwendung von Kohlenstoff-Nanofüllstoffen, ausgewählt aus den Kohlenstoff-Nanoröhrchen, allein oder in Mischung mit Graphen, mit einem Massenanteil zwischen 25 ppm und 99 ppm, um die Zugeigenschaften einer Polymermatrix zu verbessern, die mindestens ein Polymer enthält, ausgewählt aus einem thermoplastischen Polymer, allein oder in Mischung mit einer elastomeren Harzbasis, wodurch ihr Formen zu Verbundwerkstoffteilen durch jede geeignete Technik erleichtert wird und indem ihre elektrostatische Dissipationsfähigkeit während der Herstellung dieser Verbundwerkstoffteile verbessert wird, wobei das thermoplastische Polymer ausgewählt ist aus den Olefinhomo- und Olefincopolymeren.

2. Verwendung nach Anspruch 1, **dadurch gekennzeichnet, dass** das thermoplastische Polymer ausgewählt ist aus Polyethylen, Polypropylen, Polybutadien, Polybutylen und den Acrylnitril-Butadien-Styrol-Copolymeren.

3. Verwendung nach einem der Ansprüche 1 oder 2, **dadurch gekennzeichnet, dass** die elastomere Harzbasis ausgewählt ist aus: Fluorkohlenstoff- oder Fluorsiliconelastomeren, Homo- und Copolymeren von Butadien, die gegebenenfalls mit ungesättigten Monomeren funktionalisiert sind, Neopren (oder Polychloropren); Polyisobutylen (PIB), Polyisopropylen (PIP), Polyisopren, Copolymeren von Isopren mit Styrol, Butadien, Acrylnitril und/oder Methylmethacrylat, Copolymeren auf Basis von Propylen und/oder Ethylen und Terpolymeren auf Basis von Ethylen, Propylen und Dienen (EPDM), sowie Copolymeren dieser Olefine mit einem Alkyl(meth)acrylat oder Vinylacetat, Naturkautschuken (NR), halogenierten Butylkautschuken, Siliconelastomeren, Polyurethanen (PU), Plastomeren, umfassend Olefine mit C-Zahlen von C4, C5, C6, C8 C9 oder C12, Polyestern, Poly(butylacrylat), das Träger von Carbonsäure- oder Epoxyfunktionen ist, sowie ihren modifizierten oder funktionalisierten Derivaten und Mischungen davon.

4. Verwendung nach einem der vorhergehenden Ansprüche, **dadurch gekennzeichnet, dass** die Kohlenstoff-Nanofüllstoffe in die Polymermatrix in Form eines Vorverbundwerkstoffs eingebracht werden, der nach einem Verfahren erhalten wird, das die folgenden Schritte aufweist:
a) das Einbringen und dann das Mischen in einer Compoundierungsvorrichtung eines konzentrierten Masterbatches an Kohlenstoff-Nanofüllstoffen mit einer Polymermatrix, um einen Vorverbundwerkstoff zu erhalten, der 0,25 bis 3 Gew.% Kohlenstoff-Nanofüllstoffe umfasst,
b) eventuell das Umwandeln des Vorverbundwerkstoffs in feste agglomerierte Form wie Granulat oder gemahlenes Pulver.

5. Verwendung nach Anspruch 4, **dadurch gekennzeichnet, dass** der Schritt a) in mindestens zwei aufeinanderfolgenden Schritten durchgeführt wird, wobei der erste zu einem Vorverbundwerkstoff führt, der von 2,5 bis 10 Gew.%, vorzugsweise von 2,5 bis 5 Gew.% Kohlenstoff-Nanofüllstoffe umfasst, wobei der zweite zu dem Vorverbundwerkstoff führt, der von 0,25 bis 3 Gew.% Kohlenstoff-Nanofüllstoffe umfasst.

6. Verwendung nach Anspruch 4 oder 5, **dadurch gekennzeichnet, dass** die Polymermatrix von Schritt a) identisch ist mit der Polymermatrix, in die die Kohlenstoff-Nanofüllstoffe eingebracht werden.

7. Verwendung nach einem der Ansprüche 4 bis 6, **dadurch gekennzeichnet, dass** das Einbringen des Vorverbundwerkstoffs in die Polymermatrix trocken direkt in dem Werkzeug zum Formen der Polymermatrix zu Verbundwerkstoffteilen durchgeführt wird.

8. Verwendung nach einem der vorhergehenden Ansprüche, **dadurch gekennzeichnet, dass** die Polymermatrix zur Herstellung von Garnen, Folien, Rohren, Fasern, Geweben oder Filzen, die für die faseroptischen Leitungen, die Ummantelung von Kabeln, die Gas- oder Abwasser- oder Industriewasserleitungen, die extrudierten oder geformten Beschichtungen verwendbar sind, für die Gegenstände verwendet wird, die durch Spritzgießen, Extrusion, Pressen oder Formen im Automobilsektor oder im Bereich der Landwirtschaft hergestellt werden.

## Claims

1. Use of carbon-based nanofillers chosen from carbon nanotubes, alone or as a mixture with graphene, at a content by weight of between 25 ppm and 99 ppm, for improving the tensile properties of a polymer matrix including at least one polymer chosen from a thermoplastic polymer alone, or as a mixture with an elastomer resin base, while facilitating the shaping thereof into composite parts according to any appropriate technique, and while improving the electrostatic dissipation capacity thereof during the production of these composite parts, the said thermoplastic polymer being chosen from olefin homo- and copolymers.

2. Use according to Claim 1, **characterized in that** the thermoplastic polymer is chosen from polyethylene, polypropylene, polybutadiene, polybutylene and acrylonitrile/butadiene/styrene copolymers.

3. Use according to either of Claims 1 and 2, **characterized in that** the elastomer resin base is chosen from: fluorocarbon or fluorosilicone elastomers; butadiene homo- and copolymers, optionally functionalized by unsaturated monomers; neoprene (or polychloroprene); polyisobutylene (PIB); polyisopropylene (PIP); polyisoprene; copolymers of isoprene with styrene, butadiene, acrylonitrile and/or methyl methacrylate;
copolymers based on propylene and/or ethylene and terpolymers based on ethylene, propylene and dienes (EPDM), and also the copolymers of these olefins with an alkyl (meth)acrylate or vinyl acetate; natural rubbers (NRs); halogenated butyl rubbers; silicone elastomers; polyurethanes (PUs); plastomers comprising C₄, C₅, C₆, C₈, C₉ or C₁₂ olefins; polyesters; poly(butyl acrylate) carrying carboxylic acid or epoxy functional groups; and also their modified or functionalized derivatives and their mixtures.

4. Use according to any one of the preceding claims, **characterized in that** the carbon-based nanofillers are introduced into the polymer matrix in the form of a precomposite obtained according to a process comprising the following stages:
a) the introduction into and then the kneading in a compounding device of a masterbatch concentrated in carbon-based nanofillers with a polymeric matrix in order to obtain a precomposite comprising from 0.25% to 3% by weight of carbon-based nanofillers;
b) optionally the conversion of the precomposite into an agglomerated solid form, such as granules or ground powder.

5. Use according to Claim 4, **characterized in that** stage a) is carried out in at least two successive stages, the first resulting in a precomposite comprising from 2.5% to 10% by weight, preferably from 2.5% to 5% by weight, of carbon-based nanofillers, the second resulting in the precomposite comprising from 0.25% to 3% by weight of carbon-based nanofillers.

6. Use according to Claim 4 or 5, **characterized in that** the polymeric matrix of stage a) is identical to the polymer matrix into which the carbon-based nanofillers are introduced.

7. Use according to any one of Claims 4 to 6, **characterized in that** the introduction of the precomposite into the polymer matrix is carried out under dry conditions, directly in the device for shaping the polymer matrix into composite parts.

8. Use according to any one of the preceding claims, **characterized in that** the polymer matrix is used in the manufacture of yarns, films, tubes, fibres, fabrics or felts, which products can be used for optical fibre conduits, the sheathing of cables, waste or industrial water or gas pipes, or extruded or moulded coatings; for articles manufactured by injection moulding, extrusion, compression or moulding, in the motor vehicle sector or in the field of agriculture.
